# EUROPEAN PATENT APPLICATION

(11) **EP 0 928 035 A1**
(43) Date of publication of application: **07.07.1999**
(21) Application number: 99100037.3
(22) Date of filing: 04.01.1999
(51) Int. Cl.: H01M 2/02, H01M 10/04

(54) **Prismatic battery with a bow shaped casing**

(30) Priority: 05.01.1998 JP 3196998
(71) Applicant: Voltec Pte., Ltd., Singapore 508720 (SG)
(72) Inventor: Nagaura, Toru, Fukuoka-shi, Fukuoka-ken 811-1355 (JP)
(74) Representative: Barz, Peter, Dr.

(57) **Abstract**

The present invention provides prismatic batteries having improved high drain capability. A battery structure is provided wherein the laminated electrodes are bent into a bow shape inside the battery casing and the anode and cathode are brought into close connection. In addition, the two opposite sides of the battery container are bent in the same direction into a bow shape, and the battery container can be prevented from bulging due to increased internal pressure. Therefore, the electrode element can remain connected tightly in the direction of lamination even when there is an increase in the internal pressure. Hence the anode and cathode stay in close connection for a long period and, as a consequence, a battery of superior high drain capability for an extended period is provided.

## Description

This invention relates to a battery structure that provides a battery having improved performance.

Due to the trend of development of thinner types of mobile phones and notebook computers, there is a mounting demand for prismatic batteries as their driving sources. The reason for this is that compared to cylindrical batteries, prismatic batteries can be made thinner in thickness, and this particular feature can contribute greatly to reducing the thickness of portable electronic equipment.

However, prismatic batteries are inferior to cylindrical batteries with respect to high drain capability (namely, high current discharge performance). Because of this, prismatic batteries have generally been used only in mobile phones that can operate at low current. But for notebook computers that require high current discharge as well as large capacity, cylindrical batteries have generally been used. As such, the sizes of notebook computers can hardly be reduced as long as only cylindrical batteries serve as driving sources.

Meanwhile, hoping to prevent global warming, people are waiting eagerly for electric vehicles. However, since high current discharge is necessary in electric vehicles, driving sources are limited to cylindrical type batteries. In electric vehicles, numerous cells are connected in order to obtain high voltages, and the space between each pair of cells decreases the space factor. With an aim of providing batteries of as compact size as possible in electric vehicles, prismatic batteries are preferred due to their higher space factor (the space between cells can be substantially avoided).

It can be concluded from the explanation provided hereinbefore that although prismatic batteries are superior with regard to reduced battery thickness and higher space factor, they are inferior to cylindrical batteries in high drain capability. The difference in high drain capability between cylindrical batteries and prismatic batteries is attributed to the fact that the closeness between anodes and cathodes is different between the above two types of batteries.

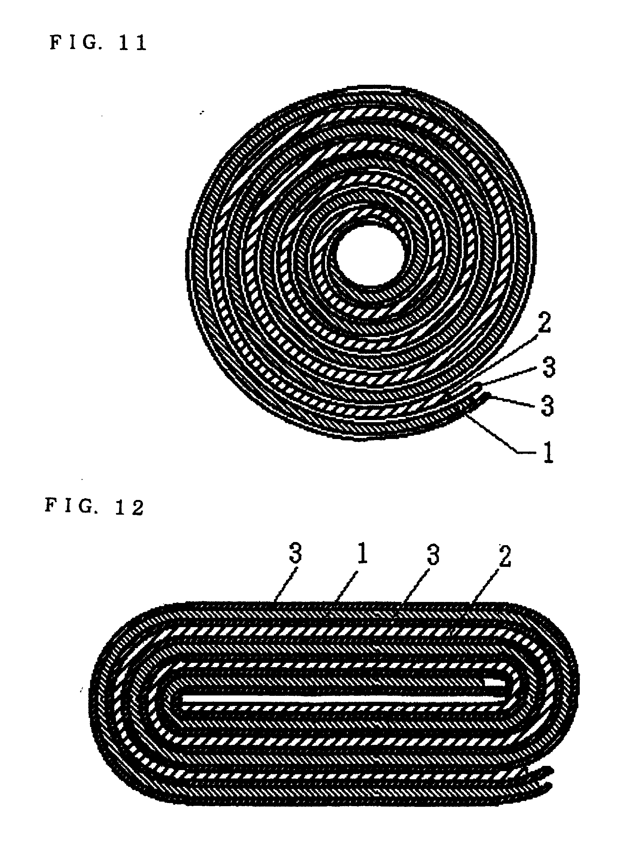

In a cylindrical battery, having a cross-section as illustrated in FIG. 11, the electrode element is prepared by winding a strip-shaped anode (1) and cathode (2) with a separator (3) therebetween into a jelly roll construction. After that, the cylindrical electrode element is housed inside a cylindrical battery casing. In that case, the inner side electrode is fastened tightly by the outer side electrode and thus, with the separator in between, the anode and cathode are in extremely close connection. When the separator contains an electrolyte (usually, an electrolytic solution), the ion conductive resistance between the cathode and anode becomes low. As a result, a cylindrical battery enjoys low internal resistance and superior high drain capability. In addition, even when the internal pressure of the battery increases, which is the usual case during charging, there is hardly any bulging in the diameter of the cylindrical battery. Therefore, no bulging occurs in the diameter of a cylindrical electrode element of jelly roll construction, which helps to maintain the close connection between the anode and cathode. Consequently, because the close connection between the anode and cathode is not affected through repeated charge-discharge cycles, the cylindrical battery can enjoy high drain capability for a long period.

On the other hand, in the case of a prismatic battery, an electrode element is prepared by either laminating an anode and cathode of small rectangular shape with a separator therebetween or, as illustrated in FIG. 12, by winding up a strip-shaped anode (1) and cathode (2) with separator (3) into a planar construction. Then the prepared electrode element is housed inside the prismatic battery casing. In the electrode element that is prepared by laminating the anode and cathode of small rectangular shape, the cathode and anode can not be in close connection unless a certain stack pressure (force to press the electrodes in the direction of lamination) is applied. In the electrode element wound up in a planar construction, it can be understood from FIG. 12 that the two ends of the inner side electrode are bent together with and fastened tightly by the outer side electrode. So, similar to the electrode element housed inside a cylindrical battery, the anode and cathode of the prismatic battery are in close connection at said two ends. However, for most portions of the electrodes that have been laminated in the direction of thickness of the electrode element, the anode and cathode can not be in close connection unless a certain stack pressure is applied.

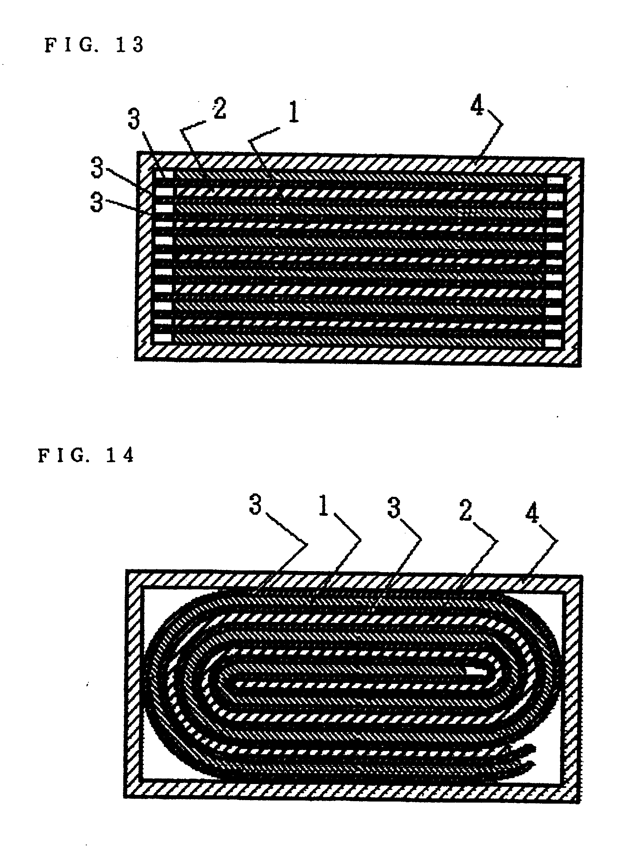

FIG. 13 illustrates a cross-sectional view of the structure of a conventional prismatic battery with electrodes of small rectangular shape. FIG. 14 illustrates a cross-sectional view of the structure of a conventional prismatic battery with an electrode element wound in a planar construction. In a conventional prismatic battery with either of the above battery structures, the electrodes which are housed and sealed completely inside the metallic prismatic battery casing (4) are laminated in parallel with the wider sides of the metallic prismatic battery casing. Since the laminated electrode element can not be inserted into the battery casing (4) with the electrodes being fastened tightly in the direction of lamination, the cathode and anode can not be in close connection. Moreover, even if the electrodes are fastened tightly in the direction of lamination, the sides of the battery casing (4) will bulge and thus the fastened electrodes will become loose. As a result, when the separator contains an electrolyte (usually, an electrolytic solution), the ion conductive resistance between the anode and cathode is high, which leads to a battery of high internal resistance and poor high drain capability.

In addition, in the case where internal pressure of a prismatic battery increases, the sides of the prismatic battery casing (4) will easily bulge. Therefore, the laminated electrode element will become loose further in the direction of lamination, which results in higher ion conductive resistance between the cathode and anode, as well as poorer high drain capability.

It is therefore the object of the present invention to improve the high drain capability of prismatic batteries.

To fulfill the object of the present invention, the structure of the prismatic battery is designed so as to have the electrodes bent into a bow, or arcuate, shape inside the battery container.

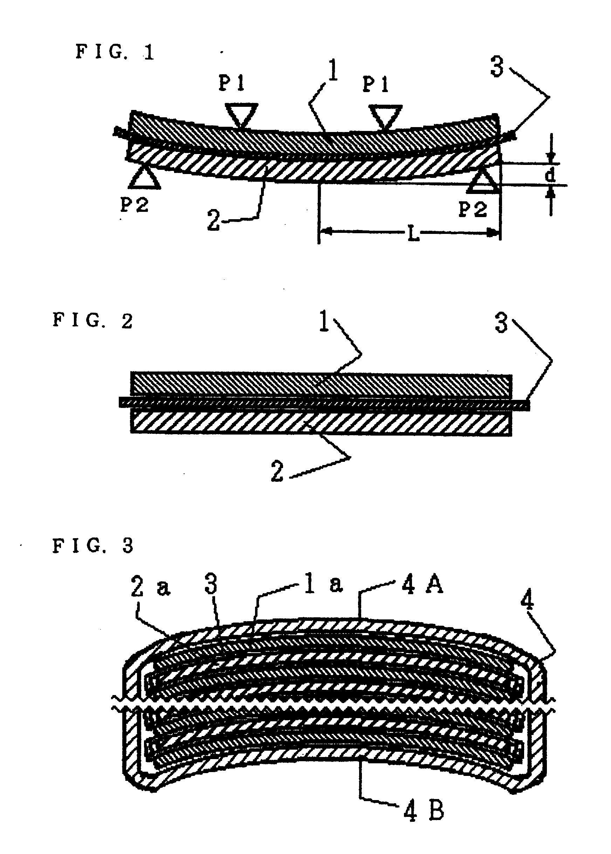

FIG. 1 demonstrates the basic principle of the battery of the present invention. Here, 1 represents an anode, 2 a cathode and 3 an electrolyte. The anode and cathode are laminated facing each other with the electrolyte therebetween; then with P1 and P2 as the fulcra, the electrodes are bent into a bow shape. As the electrodes are bent, the resilience fastens the electrodes tightly in the direction of lamination (the same direction in which the electrodes face each other), hence the anode and cathode can be in close connection.

The amount of bowing or bending of the electrode will vary depending on the dimensions of the electrode. The amount of bowing or bending should be an amount sufficient to cause close connection between the anode and cathode by the resilience thereof.

For example, when the amount of maximum bend, or deformity, as shown in FIG. 1 is indicated as "d", and a distance between the point of maximum bend and the center of the electrode is indicated as "L", it is preferable that 0.04 ≦ d/L ≦ 0.14" and, more preferably, that "0.04 ≦ d/L ≦ 0.10". In this range, it is possible to obtain a battery having a small thickness and in which the anode and cathode are in close connection.

FIG. 2 illustrates the basic principle of a conventional prismatic battery (planar configuration battery). Here, 1 represents an anode, 2 a cathode and 3 an electrolyte. The anode and cathode are laminated facing each other. As there is no force applied to the electrodes in the direction of lamination (the same direction in which the electrodes face each other), the anode and cathode are in loose connection.

In the present invention, a battery element (20) can be in a form of laminated electrodes of a rectangular shape or in a form of strip-shaped electrodes wound into a planar construction.

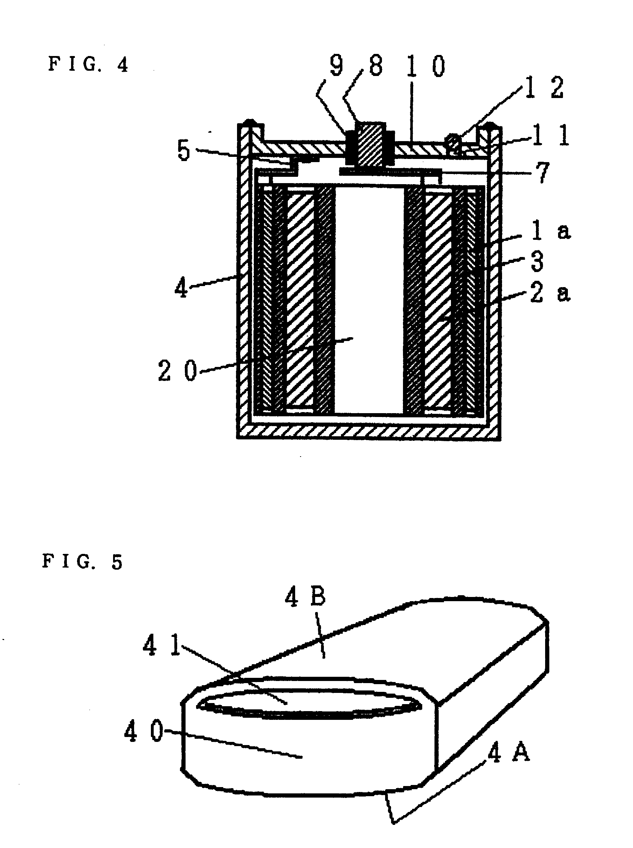

In the battery of the present invention, all the electrodes are bent in the same direction into a bow shape, as shown in FIG. 3, in the case where the electrode element is prepared by laminating electrodes of a rectangular shape. Due to such a battery structure, the anode and cathode can be in extremely close connection. Also, in the case where the electrode element is prepared by winding the strip-shaped electrodes into a planar construction, the parts of the electrodes that are laminated in the direction of the thickness of the electrode element are all bent in the same direction into a bow shape. As such, it is certain that the anode and cathode can be in close connection. Therefore, it is evident that in the present invention, ion conductive resistance can be minimized sufficiently, and as a result, the battery of the present invention enjoys low internal resistance and excellent high drain capability.

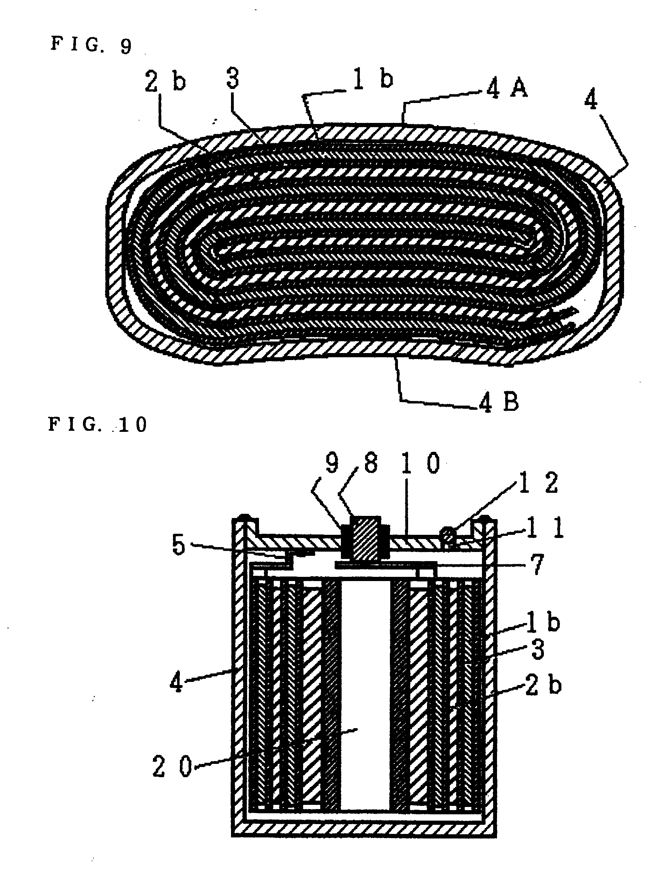

Furthermore, as shown in FIG. 3 and FIG. 9, in the present invention two opposite sides (4A and 4B) of the battery container can be bent in the same direction into a bow shape. Due to the resilience of one side (4B) which is bent inward, the battery container can be prevented from developing bulges resulting from an increase in internal battery pressure. In view of the above fact, if the above mentioned battery container is adopted in a secondary battery, the electrode element will remain tightly fastened in the direction of lamination, even when the battery internal pressure increases. Therefore, after the battery goes through repeated charge-discharge cycles, the anode and cathode still can be in close connection, which can provide a secondary battery of excellent high drain capability for a long period of operation.

In the drawings:

FIG. 1 illustrates the basic principle of the present invention.

FIG. 2 illustrates the basic principle of a conventional prismatic battery.

FIG. 3 illustrates a cross-sectional view of a battery of the present invention.

FIG. 4 illustrates a vertical sectional view of a battery of the present invention.

FIG. 5 illustrates a typical battery casing of the present invention.

FIG. 6 illustrates a cross-sectional view of a battery casing with the electrode element housed inside.

FIG. 7 illustrates the bottom of a battery casing with the electrode element housed inside.

FIG. 8 illustrates a device with which a battery casing sides are pressed.

FIG. 9 illustrates a cross-sectional view of a battery of the present invention.

FIG.10 illustrates a vertical sectional view of a battery of the present invention.

FIG.11 illustrates a cross-sectional view of a electrode element of a cylindrical battery.

FIG.12 illustrates a cross-sectional view of an electrode element of planar construction.

FIG.13 illustrates a cross-sectional view of one embodiment of a conventional prismatic battery.

FIG.14 illustrates a cross-sectional view of another embodiment of a conventional prismatic battery.

The present invention is explained in further detail below.

### Embodiment 1

Detailed procedures for producing a battery of the present invention are described below with reference to FIG. 3 - FIG. 8.

Firstly, anodes were prepared by following a conventional method. Meso-carbon microbeads (d002 = 3.36Å) which had been heat treated, were mixed with acetylene black, a binding agent and a solvent to form a slurry. The slurry was applied evenly to both sides of a copper foil which is to be an anode current collector. After the coated copper foil was dried, it was roller compressed to prepare sheets of anodes. Then each sheet of anode was cut into an anode (1a) of rectangular shape and a size of 40mm x 8mm. A nickel lead was welded to a corner of the copper foil current collector of each anode (1a), at which the copper foil was left uncoated.

By following a conventional method, cathodes were prepared from a slurry of lithium cobalt oxide (LiCoO₂) as active cathode material, conductive agent, binding agent and solvent. The slurry was coated evenly to both sides of an aluminum foil which was used as a cathode current collector. After the aluminum foil was coated, it was dried and roller compressed to prepare sheets of cathodes. Then each sheet of cathode was cut into a cathode (2a) of rectangular shape and a size of 40mm x 38mm. At a corner of each cathode which was left uncoated, an aluminum lead was welded to the aluminum current collector.

The battery container (4) adopted in this embodiment was a nickel-plated iron casing, which has two bulged sides (4A, 4B) and a casing bottom (40) with a portion (41) removed, as illustrated in FIG. 5.

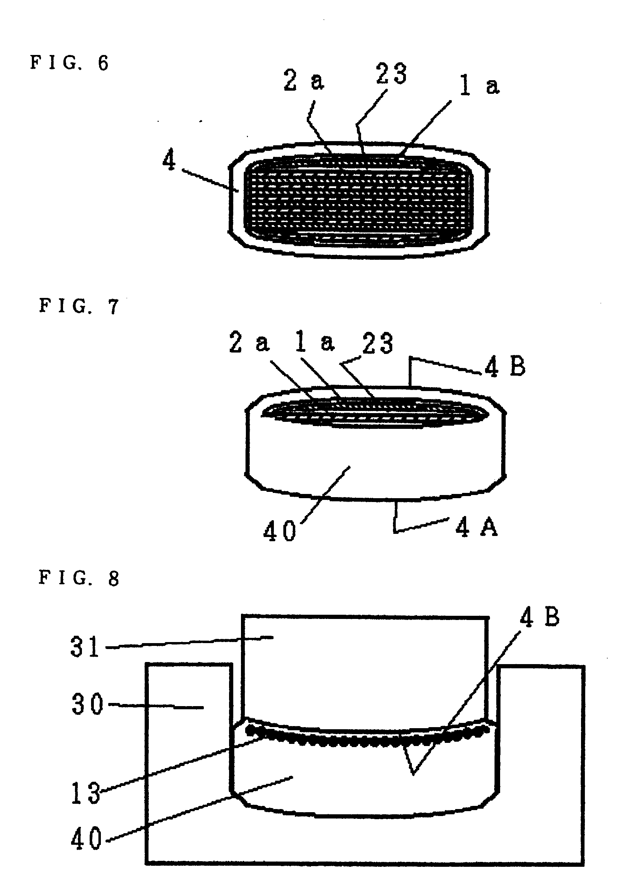

Each of the prepared rectangle-shaped cathodes (2a) was inserted into and enveloped by a bag of porous polypropylene material, which functions as separator. Then 15 pieces of such cathodes and 16 pieces of the prepared rectangular-shaped anodes (1a) were laid on each other alternately to prepare an electrode element. The leads drawn out from the 15 pieces of the cathodes were collected into one cathode lead (7), which was welded to a cathode external terminal (8) which is fixed at a sealing cap (10) with a plastic packing (9) in between. The leads drawn out from the 16 pieces of the anodes were also collected into one anode lead (5), which was welded to the sealing cap (10). Then the electrode element was housed inside the battery container (4). At the time the electrode element was housed inside the battery container, insufficient stack pressure was applied to the electrode element. Therefore, there were gaps (23) between the anodes (1a) and cathodes (2a) and the anodes (1a) and cathodes (2a) were not in close connection, which can be understood from FIG. 6 showing a cross-sectional view of the battery and FIG. 7 showing a bottom view of the battery.

Then, the battery container with the electrode element housed inside was placed in a jig (30) as shown in FIG. 8, and one side of the battery container was pressed by pressing tool (31). The removed portion at the bottom of the battery container was closed, and the joint of the battery side (4B) and the battery bottom (40) was welded with a laser welder. After the sealing cap (10) was welded to the opening part of the battery container, the battery container with the electrode element housed inside was taken out of the jig. As the cross-sectional view in FIG. 3 shows, at that point the anodes (1a) and cathodes (2a) laminated inside the battery container were all bent in the same direction into a bow shape. Based on the basic principle of the present invention which is demonstrated in FIG. 1, it can be concluded that the anodes (1a) and cathodes (2a) were in close connection. In addition, all of the laminated electrodes were fastened tightly by the sides (4A and 4B) of the battery container, and the battery container had become more resistant to bulging because the side (4B) was bent inward. Hence, there is no possibility that the battery container will be cause to bulge by the pressure of the resilience from the fastened laminated electrode element.

An electrolyte was then injected into each battery casing through an electrolyte injection opening (11) on the sealing cap (10). After the electrolyte injection was completed, the electrolyte injection opening (11) was sealed by welding a metallic ball (12) to it. Thus, a planar configuration lithium-ion secondary battery (S1), with a completely sealed battery structure as shown in FIG. 4, was completed.

### Embodiment 2

Embodiment 2 is explained below with reference to FIG. 9 and FIG. 10. First, sheets of anodes were prepared in the same manner as in Embodiment 1. Then each sheet of anode was cut into a strip-shaped anode (1b) of 40 mm in width. At one end of the strip-shaped anode, the copper foil current collector was left uncoated where a nickel anode lead (5) was welded.

Sheets of cathodes were also prepared in the same manner as in Embodiment 1. Then each sheet of cathode was made into a strip-shaped cathode (2b) of 39 mm in width. At one end of the strip-shaped cathode, the aluminum current collector was left uncoated, where an aluminum cathode lead (7) was welded.

The strip-shaped anode (1b) and cathode (2b) were wound with a porous polypropylene separator (3) therebetween into an electrode element of planar construction as illustrated in FIG. 12. The cathode lead (7) drawn out from the electrode element was welded to cathode external terminal (8) which was fixed at sealing cap (10) with a plastic packing (9) in between. Anode lead (5) drawn out from the electrode element was welded to the sealing cap (10). After that, the electrode element was housed inside battery container (4) that had been prepared in exactly the same manner as in Embodiment 1. By the same procedures as described in Embodiment 1, the sides of the battery container were pressed, the removed portion at the bottom of the battery container was closed, the joint of the side and bottom of the battery container was welded with a laser welder, and then the sealing cap (10) was welded to the opening of the battery container. Then, in the same way as in Embodiment 1, electrolyte was injected inside the battery casing, the electrolyte injection opening was sealed by welding a metallic ball (12) to it. A completely sealed planar configuration lithium-ion secondary battery (S2), with a battery structure as shown in FIG. 9 and FIG.10, was produced.

A cross-sectional view of the finished planar configuration lithium-ion secondary battery (S2) of Embodiment 2 is illustrated in FIG. 9. Inside the battery container (4), the wound electrode element consists of two parts in regard to position arrangement. One is positioned at the two sides of the electrode element which have been bent, or folded, and the other is positioned between said two bent sides of the electrode element and is laminated in the direction of the thickness of the planar configuration. For the portions of the electrodes positioned at the sides of the electrode element that have been bent, the inner side electrode is bent in the same direction as the outer side electrode and is tightly fastened by the outer side electrode, so the anode is in close connection with the cathode. Meanwhile, as the laminated portion of the electrodes in the thickness direction is also bent in the same direction into a bow shape, the anode (1b) and cathode (2b) are in close connection according to the basic principle of the present invention as demonstrated in FIG. 1. In addition, the laminated portion of the electrodes is fastened by the two sides (4A and 4B) of the battery container. Because the side (4B) of the battery container has been bent inward, the battery container is more resistant to bulging. As a result, there is no possibility that the battery container will be bulge due to pressure from the resilience of the laminated portion of the electrodes, and hence the electrodes can remain tightly fastened.

### High Drain Discharge Test of the Batteries

The batteries (S1) and (S2), produced in Embodiment 1 and Embodiment 2, respectively, were fully charged, and then discharged to a cut-off voltage of 3.0V at currents of 0.2C, 0.5C, 1C, 2C as well as 3C. The discharge capacity at each discharge current was calculated. When the discharge capacity at a discharge current of 1C is designated as 100%, the discharge capacities at different discharge currents are given in Table 1.

The batteries for comparison were lithium-ion secondary batteries available on the market and they were subjected to the same test. Battery 1 for Comparison is a prismatic lithium-ion secondary battery, while Battery 2 for Comparison is a cylindrical lithium-ion secondary battery.

**Table 1**

| Discharge Current | 0.2C | 0.5C | 1C | 2C | 3C |
|---|---|---|---|---|---|
| Battery 1 for Comparison | 104% | 103% | 100% | 67% | 30% |
| Battery 2 for Comparison | 102% | 101% | 100% | 80% | 51% |
| Battery (S1) | 102% | 101% | 100% | 81% | 52% |
| Battery (S2) | 102% | 101% | 100% | 82% | 52% |

From the data for Battery 1 and Battery 2 for Comparison, it is evident that the decrease in the discharge capacity at high current (2C, 3C) is greater in the conventional prismatic lithium-ion secondary battery than in the conventional cylindrical lithium-ion secondary battery. This means that the conventional prismatic battery is inferior to the conventional cylindrical battery in respect of high drain capability. The difference in the high drain capability between the prismatic battery and cylindrical battery is believed to relate to the distinction in the close connection of the anode and cathode between the two types of batteries.

It should also be clear from the data presented in Table 1 that the decrease in discharge capacity at high current (2C, 3C) of either Battery (S1) or Battery (S2) of the present invention is less than that of Battery 1 for Comparison. Therefore, the prismatic battery of the present invention enjoys the same high drain capability as a conventional cylindrical battery.

FIG. 14 illustrates the basic battery structure of Battery 1 for Comparison. It is an electrode element of planar construction that is housed inside the prismatic battery casing. Inside the battery container (4), it can be observed from FIG. 14 that the wound up electrode element consists of two portions with regards to position arrangement. One is positioned at the two sides, or ends, of the electrode element that have been bent, and the other is positioned between said two bent sides and is laminated in the direction of the thickness of the electrode. The major portion of each electrode making up the electrode element is laminated in the direction of the thickness of the electrode element, in which direction there is no stack pressure. Therefore, the ion conductive resistance between the cathode and anode laminated in the direction of the thickness of the electrode element is high in Battery 1 for Comparison. Accordingly, it can be understood that at high current (such as 2.0C, 3.0C) discharge, the discharge efficiency decreases and the discharge capacity deteriorates.

In the batteries of the present invention, the electrodes laminated in the direction of the thickness of the electrode element are fastened tightly by the battery container sides. Moreover, since the side (4B) is bent inward, the battery container becomes more resistant to bulging. Therefore, the battery container will not bulge due to the resilience of the bent laminated electrodes. With the entire portion of the electrodes fastened tightly, the ion conductive resistance between the anode and cathode is minimized, which leads to superior high drain capability.

Although in Embodiment 1 and Embodiment 2 that have been described herein to represent the present invention, the lithium-ion secondary batteries were made using lithium cobalt oxide and carbon material as active materials for the cathode and anode respectively, it should be clear that the present invention can also be applied to batteries using other active materials, to other types of batteries (e.g. nickel metal hydride secondary batteries), to primary batteries, and to other sizes of batteries.

### Effects of the Present Invention

In the batteries of the present invention, since the electrodes have been bent into a bow shape, the resilience of the electrodes acts as a force to bring the electrodes into close connection in the direction of lamination (the same direction in which the electrodes face each other). Hence, in the batteries of the present invention, the anodes and cathodes are in close connection, the ion conductive resistance between the anode and cathode decreases, and thus the high current discharge performance (high drain capability) becomes superior. What is more is that, in the batteries of the present invention, the two opposite sides of the battery containers can be bent in the same direction into a bow shape, so the battery container becomes more resistant to bulging. This means that the stack pressure of the electrode element will be maintained tightly by the sides of the battery container even if the battery internal pressure increases due to charging, etc.

As long as a good stack pressure of the electrode element is maintained for a long period despite many repeated charge-discharge cycles, since the anode and cathode can be kept in close connection, the batteries of the present invention demonstrate superior high drain capability for a long period.

In addition, because the two opposite sides of the battery container have been bent in the same direction into a bow shape, the convex surface and the concave surface of batteries can be paired up. In this way, there will be no large gaps between cells in a battery assembly unit.

As a consequence, the present invention can realize a planar configuration battery of excellent high drain capability and can improve the space factor of a battery assembly unit (the space between cells in a battery assembly unit can be avoided).

It has been manifested that the present invention is of great industrial value because of its contribution towards portable electric equipment requiring high current discharge and reducing the battery sizes in electric vehicles.

## Claims

1. A battery having a prismatic shape and comprising a laminate of electrodes housed inside the battery container and bent into a bow shape.

2. A battery having a prismatic shape, wherein at least one electrode element having a planar construction and prepared by winding strip-shaped electrodes to form a laminate of electrodes is housed and sealed inside a battery container; and wherein a major portion of the laminate of electrodes is bent into a bow shape in a direction of thickness of the laminate inside said battery container.

3. A battery according to claim 1 or claim 2, wherein two opposite sides of the battery container are bent into a bow shape in the same direction as said laminate of electrodes.
